# EUROPEAN PATENT SPECIFICATION

(11) **EP 0 193 779 B1**
(45) Date of publication and mention of the grant of the patent: **24.03.1993**
(21) Application number: 86102005.5
(22) Date of filing: 17.02.1986
(51) Int. Cl.: G02B 6/44

(54) **Optical-fibres telecommunications submarine cable**
Faseroptisches Nachrichtenunterwasserkabel
Câble sous-marin à fibre optique de télécommunications

(30) Priority: 26.02.1985 IT 1965485
(43) Date of publication of application: 10.09.1986
(73) Proprietor: PIRELLI CAVI S.p.A., 20123 Milano (IT)
(72) Inventor: Gazzana Priaroggia, Paolo, Milan (IT)
(74) Representative: Giannesi, Pier Giovanni

(56) References cited:
- FR-A- 2 435 051
- GB-A- 1 422 956
- GB-A- 2 052 092
- GB-A- 2 064 811
- GB-A- 2 157 847
- GB-A- 2 157 848
- JP-A-59 211 003
- US-A- 4 381 140
- PATENT ABSTRACTS OF JAPAN, vol. 9, no. 79 (P-347)(1802), 9th April 1985

## Description

The present invention refers to a submarine, optical fibers telecommunications cable, apt for being layed and operated even at great sea depths.

Submarine, optical fibers telecommunication cables are subjected to very heavy mechanical stresses but, the optical fibers housed inside them, in being very delicate, cannot support even the minimum of mechanical stresses. Optical fibers in fact, are fragile and hence, easily breakable. Moreover, the presence of any mechanical stresses in them, even of a small amount, can cause an attenuation of the transmitted signals. Any rupturing of the optical fibres and attenuations of the transmitted signals, would signify putting the cable out of use.

The main factors which give rise to mechanical stresses in submarine, optical-fibres cables, are the following:
- the underwater ambient where the cable is made to operate, that exercises a hydrostatic pressure which increases if the sea-depth deepens;
- the laying operation that originates mechanical stresses in the cable which increase whenever the laying depth becomes greater - due to the augmented weight of the length of cable in play, during said operation;
- the temperature variations to which the cable can be subjected, during its transportation from the manufacturing area to the laying zone, that give rise to mechanical stresses in the sheath resulting from the thermal expansion of the core, with respect to that of the sheath, because of the diversities in the materials which constitute these elements, in the known cables.

The known submarine cables are endowed with a metallic mechanically resistent strenght member and a continuous metallic sheath that are disposed around the cable-core for protecting the optical-fibres housed therein.

As examples of the known submarine optical fibres cables for telecommunications there are those that are described in the U.K. PATENTS No. 2.021.282 and 2.064.811 and in the AUSTRALIAN PATENT APPLICATION No. 74.368 A/81.

In the known cables, the presence of a metallic sheath and of a mechan-ically resistent strenght member around the core wherein the optical-fibres are housed, involves a considerable flexional rigidity.

This is because both, the strenght member and the metallic sheath are, per se flexionally rigid elements, and also because they are disposed distanced apart from the longitudinal axis of the cable - which constitutes the neutral axis of flexion for them.

Moreover, in practice, said flexional rigidity can turn out to be quite unacceptable in the case of the known submarine optical fibres cables used for great depths - for example, of over 1000 meters. In fact, whenever the laying depth is increased, the mechanically resistent strenght member - that must have its dimensions enlarged for allowing the cable to resist the greater applied stresses, can only be augmented through adding metallic materials onto the outside of the cable - and hence, in a position that is still far away from the neutral axis of flexion.

Hence, the known cables present difficulties when handling and laying them - owing to their high rigidity.

The aim of the present invention is to realize submarine optical-fibres telecommunications cables which - as compared to the known submarine cables and at a parity of their laying depth, have a greater flexibility, a lesser weight per length unit and are not subject to damages when undergoing any temperature variations, during their transportation.

What forms the object of the present invention is a submarine optical fiber telecommunication cable comprising a cylindrical core (1) upon whose outer surface there are present helicoidal grooves (7), filled with an incompressible liquid, inside each one of which grooves at least one optical fiber (8) is housed, a strenght member formed by a rope (2) of filiform elements (4), whose axis (3) coincides with the cable axis, said strength member being embedded in said core (1), and a sheath (9) enclosing said core (1), characterized in that the cable comprises just one sheath (9), said sheath being made of plastics material, in that the core is made from plastics material, in that the rope (2) is a torsion balanced rope having a cross section of not less than 50 mm² said rope being the only mechanically resistant strength member of the cable, and in that the interspaces (5) between the filioform elements (4) of the rope (2) are filled with an incompressible liquid.

The compact torsion balanced rope, constituting the strenght member of a submarine cable according to the invention, is planned for substantially resisting tractional stresses during the laying operation, and its cross-section is not less than 50 mm².

Moreover, in a cable according to the invention, the optical fibres can be loosely contained in small tubes, filled with an incompressible liquid, housed in the core grooves also filled with an incompressible liquid.

As an alternative, the plastic material of the cable sheath can penetrate into the grooves till filling them - with forming ribs which assume a profile complementary to that of the small tubes.

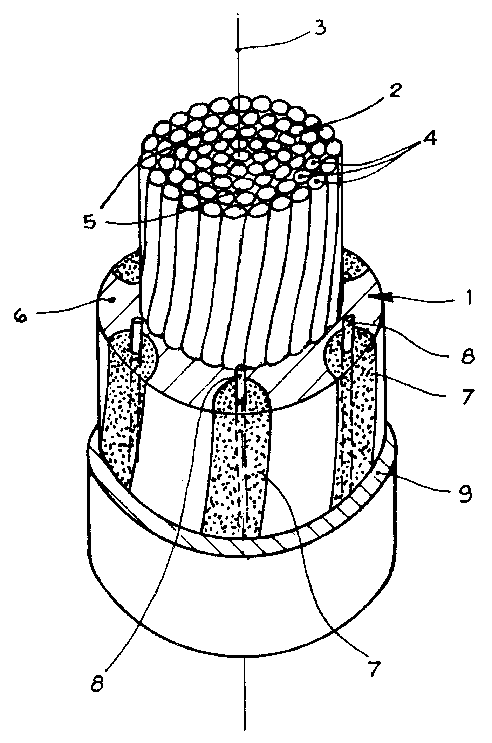

The present invention will be better understood from the following detailed description - made solely by way of non limiting example, with reference to the figure in the attached drawing TABLE - where a perspective view of a submarine cable-length, according to the invention is shown, with parts removed for better illustrating the cable structure.

As shown in the said figure, the cable comprises a plastic cylindrical core 1, englobing and fixed to a strenght member 2 that is disposed in such a way as to occupy the radially innermost position of the core, and the axis of the strenght member 2, coincides with the longitudinal axis 3, of the cable. The strenght member 2 is planned - and hence, dimensioned for substantially resisting all the tractional stresses that are supported by the cable during the laying operations. In particular the strenght member 2 is formed by a compact torsion balanced rope whose cross-section is not less that 50 mm², formed by filaments 4, made of a material that has a high mechanical resistence to traction - such as, for example: steel, aromatic polyamides and carbon-fibres.

The filaments 4 of the rope 2, are disposed helicoidally, in coaxial superimposed layers, and the winding direction of the filaments of one layer is preferably opposed to that of the filaments in the adjacent layer.
With the said disposition of the filaments 4, when the rope 2 is subjected to tractions, it does not undergo torsions and presents a good flexibility. The spaces 5, existing between the filaments 4, are filled with a practically incompressible liquid such as, for example: petroleum jelly, silicone grease and such like.

A plastic layer 6, is present around the rope 2.

On the outer surface of the layer 6, which represents the outer surface of the cable core 1, there are present the helicoidal grooves 7 which can have, by choice, either a closed-helix or an open-helix configuration - intending by the latter term that the lay-out of each groove is comprised by S-shaped lengths alternated with Z-shaped lengths.

Inside the grooves 7 there are loosely housed the optical fibres 8, and these grooves are completely filled with the same, practically incompressible liquid, with which are filled the interspaces 5, between the filiform elements 4, of the rope 2.

Moreover, the grooves 7 have a width - in correspondence of the outer surface of the layer 6, as well as a depth, of not over 5 mm.

Plastic materials for forming the layer 6 can be selected, for example, from among the polyolefins - for instance, polyethylene and polypropylene, or from among the aliphatic polyamides, and such like.

Preferably, the layer 6 is an aliphatic polyamide - since said material renders the plastic core of the cable to be less contractile radially under the action of hydrostatic pressure. In this manner there is obviated along the cable, any resulting, minimum possible variations in the dimensions of the grooves 7, and any longitudinal movements of the incompressible liquid that fills them due to this cause.

The cable core 1, is surrounded by a sheath 9 which - can even be made of a diverse plastic material to that used for the layer 6, that encloses the grooves 7, and it is disposed in direct contact with the outer surface of said plastic layer 6.

For forming the cable sheath 9, there can be used - for example, the polyolefins - such as polyethylene and polypropylene, the aliphatic polyamides, and such like. For preference, the sheath 9 is made of an aliphatic polyamide.

Eventually, a binding of plastic tapes can be interposed in-between the layer 6 and the plastic sheath 9 of the cable when, at the time of manufacturing the cable, the leaking out of the incompressible liquid from the grooves 7 is feared in the interval of time prior to applying the plastic sheath over the cable core.

To the plastic sheath 9, other elements (not shown in the figure) can be applied - such as, for example, anti-shipworm protections of the per se known type, eventual windings of good electrical conductor metallic tapes (either insulated or not), but in practice, none of these elements should -by its presence, form either a watertight metallic sheath, or a mechanically resistent strenght member for the cable. In this manner, a cable according to the invention, is devoid of any whatsoever watertight metallic sheath, or of any whatsoever strenght member that is mechanically resistent to stresses, disposed radially externally to the core of the cable itself and so as to surround the zone where the optical-fibres are placed.

According to an alternative variation of realization (not shown), the optical-fibres 8, are loosely contained inside small tubes - made, for example, of plastic or other materials, filled with an incompressible liquid, that are housed in the grooves 7 of the core 1. Any space in the grooves 7 that is left void by the small tubes, is either also filled with an incompressible liquid, or else, it is filled up with the plastic material of the sheath 9. In said instance, the plastic sheath 9 of the cable presents -in correspondence of the grooves 7, ribs with a profile having a form which is complementary to that of the tubes.

As a further alternative realization (not shown), the cable strenght member 2 made by a compact torsion balanced rope, can comprise a longitudinal metallic element having a high electrical conductibility - that is apt for originating an electrical conductor for allowing for the feeding the optoelectronic repeaters of the signals transmitted by the optical-fibres, which are disposed along the cable.

For example, the longitudinal metallic element having a high electrical conductibility, is comprised by at least one connected copper wire - i.e. either incorporated, or else, wound around the rope - which comprised the strenght member 2, of the cable.

The return conductor can be the sea.

As an alternative, the return conductor can be comprised by a combination of the sea and of a good electrical conductor metallic tape, that is wound around the sheath.

According to another alternative variation, the return conductor is comprised by a good electrical conductor metallic tape, interposed between the core and the plastic sheath of the cable, or else by a good electrical conductor metallic tape incorporated in said cable sheath.

In a further embodiment - valid in the case where no longitudinal metallic element having a high electrical conductivity, is associated to the cable strenght member, the feeding of the optoelectronic repeaters can be had through an electrical circuit that comprises a good electrical conductor insulated metallic tape wound around the sheath - with utilizing the sea as a return conductor.

However, no matter what the configuration is, for the above said good electrical conductor metallic tapes (either insulated or not) disposed either under, or inside the plastic sheath of the cable, they must neither originate a metallic watertight sheath, nor a mechanically resistent strengt member for the cable.

From description given above and from the following considerations, it can be understood that, through the cables according to the invention, the proposed aims can be achieved.

In the submarine optical-fibres telecommunications cables according to the invention, no metallic mechanically resistent elements exist around the core wherein the optical-fibres are disposed.

In fact the mechanically resistent strenght member is disposed in the cable's radially innermost zone, close to the longitudinal axis of the cable, and the sheath is made out of plastic - and not out of any metallic material as is to be found in the known cables of the same type.

As a consequence, the flexibility of the cables according to the invention, results as being greater when compared to that of the known cables -both, because the mechanically resistent strenght member is disposed exclusively in the vicinity of the longitudinal axis of the cable - that is the neutral axis of flexion, and also because the plastic sheath is more flexible than a metallic sheath.

In this manner, there is obtained a reduction of weight per length unit of the cable - as with respect to the known cables.

Moreover, even in the absence of a mechanically resistent strenght member around the core wherein the optical-fibres are disposed, no risks are to be feared of the cable structure collapsing - under the action of hydrostatic pressure, even at great sea-depths.

In fact, the resistence to hydrostatic pressure in the cables according to the invention, is ensured by the fact that no spaces void of material, exist in the cable structure - seeing that both, the interspaces existing between the filiform elements of the rope that forms the mechanically resistent strenght member, as well as the tubes housing the optical-fibres, are all filled with a practically incompressible liquid. Moreover, the radially innermost surface of the plastic sheath adheres perfectly to the cable core, without leaving any interstices.

Moreover, the absence of a mechanically-resistent strenght member around the cable core, eliminates the danger which exists in the known cables, in that it could exercise compressions on the cable core and hence, cause stresses in the optical-fibres when, during the laying operation, the said strenght member tends to grip the core, due to the effects of the tensile stresses imposed on it.

In cables according to the invention, the sheath is made out of plastic and not out of a metallic material - as is in the known submarine optical-fibres cables.

In these latter, the presence to-date has been considered indispensible of a continuous metallic watertight sheath for surrounding the zone that is occupied by the optical-fibres, for so preventing even the minimum traces of water from penetrating into the cable and reaching the optical-fibres, with thus causing attenuations of the transmitted signals and breakages.

In the cable according to the invention, in spite of the presence of a plastic sheath - that cannot guarantee an impermeability equal to that of a continuous metallic sheath, in practice, none of the drawbacks that are to be feared for optical-fibres, are verified.

Moreover, in the cables according to the invention, the elimination of the continuous and watertight metallic sheath - which is substituted by a plastic sheath, renders the said cables to be devoid of the dangers resulting from the temperature variations to which a cable can be subjected, during its transportation - from the manufacturing zone to the cable-laying zone.

In fact, when compared to a metallic sheath - a sheath made of plastic has a greater possibility for expansion. Therefore, owing to the expansibility of a plastic sheath, no dangers of ruptures and crackings are to be feared - which could be verified with metallic sheaths whenever the thermal expansions of the components, enclosed inside the sheath, are caused by any whatsoever possible temperature increase that could occur, due to directly exposing the cables to the sun.

Although some forms of realization of the cable according to the invention have been illustrated and described, what is also intended as being comprised within the scope of this invention are all those possible alternative embodiments that are accessible to anyone skilled in the art.

## Claims

1. Submarine optical fiber telecommunication cable comprising a cylindrical core (1) upon whose outer surface there are present helicoidal grooves (7), filled with an incompressible liquid, inside each one of which grooves at least one optical fiber (8) is housed, a strenght member formed by a rope (2) of filiform elements (4), whose axis (3) coincides with the cable axis, said strength member being embedded in said core (1), and a sheath (9) enclosing said core (1), characterized in that the cable comprises just one sheath (9), said sheath being made of plastics material, in that the core is made from plastics material, in that the rope (2) is a torsion balanced rope having a cross section of not less than 50 mm² said rope being the only mechanically resistant strength member of the cable, and in that the interspaces (5) between the filioform elements (4) of the rope (2) are filled with an incompressible liquid.

2. Submarine optical fiber telecommunication cable according to claim 1, characterized in that the plastic sheath (9) of the cable is of a plastics material selected from the groups of polyolefins and aliphatic polyamides.

3. Submarine optical fiber telecommunication cable, according to claim 1, characterized by the fact that the plastic sheath (9) penetrates into the grooves (7) thereby forming ribs.

4. Submarine optical fiber telecommunication cable, according to claim 3, characterized by the fact that the said ribs have a profile which complements that of a small tube inserted into said helicoidal grooves (7), that loosely houses at least one optical fiber (8), said small tube being filled with an incompressible liquid.

5. Submarine optical fiber telecommunication cable, according to claim 1, characterized by the fact that in the cylindrical plastic core (1) enclosing the strenght member, the helicoidal grooves (7), filled with an incompressible liquid, have a width as well as a depth, that is not over 5 mm.

6. Submarine optical fiber telecommunication cable, according to claim 5, characterized by the fact that, the helicoidal grooves (7) receive at least one small tube, filled with an incompressible liquid, wherein at least one optical fiber (8) is loosely housed, with the space comprised between the tube and the groove (7) also being filled with an incompressible liquid.

7. Submarine optical fiber telecommunication cable, according to claim 1, characterized by the fact that, said strenght member comprises a longitudinal metallic element having a high electrical conductivity.

8. Submarine optical fiber telecommunication cable, according to claim 7, characterized by the fact that said metallic element is constituted by at least one copper wire incorporated in or wound around said rope.

## Patentansprüche

1. Faseroptisches Nachrichtenunterwaserkabel, umfassend einen zylindrischen Kern (1), auf dessen Außenfläche schraubenlinienförmige Nuten (7) vorhanden sind, die mit einer inkompressiblen Flüssigkeit gefüllt sind und in deren jeder wenigstens eine optische Faser (8) aufgenommen ist, einen Festigkeitsteil, der durch ein Seil (2) aus fadenartigen Elementen (4) gebildet ist und dessen Achse (3) mit der Achse des Kabels übereinstimmt, wobei der Festigkeitsteil in den Kern (1) eingebettet ist, und einen Mantel (9), der den Kern umschließt,
dadurch gekennzeichnet,
daß das Kabel nur einen Mantel (9) aufweist, der aus Kunststoffmaterial gebildet ist, der Kern aus Kunststoffmaterial gebildet ist und das Seil (2) ein drehungsausbalanciertes Seil ist, welches einen Querschnitt hat, der nicht kleiner als 50 mm² ist, das Seil der einzige mechanisch wiederstandsfähige Festigkeitsteil des Kabels ist, und daß die Zwischenräume (5) zwischen den fadenartigen Elementen (4) des Seils (2) mit einer inkompressiblen Flüssigkeit gefüllt sind.

2. Faseroptisches Nachrichtenunterwasserkabel nach Anspruch 1,
dadurch gekennzeichnet,
daß der Kunststoffmantel (9) des Kabels aus Kunststoffmaterial gebildet ist, welches aus den Gruppen von Polyolefinen und aliphatischen Polyamiden ausgewählt ist.

3. Faseroptisches Nachrichtenunterwasserkabel nach Anspruch 1,
dadurch gekennzeichnet,
daß der Kunststoffmantel (9) in die Nuten (7) eindringt und dadurch Rippen bildet.

4. Faseroptisches Nachrichtenunterwasserkabel nach Anspruch 3,
dadurch gekennzeichnet,
daß die genannten Rippen ein Profil haben, welches dasjenige eines kleinen Rohres oder Schlauches komplementiert, das bzw. der in die schraubenlinienförmigen Nuten (7) eingesetzt ist und wenigstens eine optische Faser (8) lose aufnimmt, wobei das kleine Rohr bzw. der kleine Schlauch mit einer inkompressiblen Flüssigkeit gefüllt ist.

5. Faseroptisches Nachrichtenunterwasserkabel nach Anspruch 1,
dadurch gekennzeichnet,
daß in dem zylindrischen Kunststoffkern (1), der den Festigkeitsteil umschließt, die mit einer inkompressiblen Flüssigkeit gefüllten schraubenlinienförmigen Nuten (7) eine Breite und eine Tiefe haben, die nicht größer als 5 mm ist.

6. Faseroptisches Nachrichtenunterwasserkabel nach Anspruch 5,
dadurch gekennzeichnet,
daß die schraubenlinienförmigen Nuten (7) wenigstens ein kleines Rohr bzw. einen kleinen Schlauch aufnehmen, das bzw. der mit einer inkompressiblen Flüssigkeit gefüllt ist und in dem wenigstens eine optische Faser (8) lose aufgenommen ist, wobei der Raum zwischen dem Rohr oder Schlauch und der Nut (7) ebenfalls mit einer inkompressiblen Flüssigkeit gefüllt ist.'

7. Faseroptisches Nachrichtenunterwasserkabel nach Anspruch 1,
dadurch gekennzeichnet,
daß der Festigkeitsteil ein langgestrecktes Metallelement aufweist, welches hohe elektrische Leitfähigkeit hat.

8. Faseroptisches Nachrichtenunterwasserkabel nach Anspruch 7,
dadurch gekennzeichnet,
daß das Metallelement durch wenigstens einen Kupferdraht dargestellt ist, der in das Seil eingelagert oder rund um dieses gewickelt ist.

## Revendications

1. Câble sous-marin de télécommunications à fibres optiques comprenant un noyau cylindrique (1) sur la surface extérieure duquel sont présentes des gorges en hélice (7), remplies d'un liquide incompressible, à l'intérieur de chacune desquelles est logée au moins une fibre optique (8), un organe de résistance formé par une corde (2) en éléments filiformes (4) dont l'axe (3) coïncide avec l'axe du câble, ledit organe résistant étant encastré dans ledit noyau (1), et une gaine (9) enfermant ledit noyau (1), caractérisé en ce que le câble ne comprend qu'une gaine (9), ladite gaine étant en matière plastique, en ce que le noyau est en matière plastique, en ce que la corde (2) est une corde équilibrée en torsion dont la section transversale n'est pas inférieure à 50 mm, ladite corde étant le seul organe mécaniquement résistant du câble, et en ce que les espaces intermédiaires (5) entre les éléments filiformes (4) de la corde (2) sont remplis d'un liquide incompressible.

2. Câble sous-marin de télécommunications à fibres optiques selon la revendication 1, caractérisé en ce que la gaine plastique (9) du câble est en une matière plastique choisie dans le groupe des polyoléfines et des polyamides aliphatiques.

3. Câble sous-marin de télécommunications à fibres optiques selon la revendication 1, caractérisé en ce que la gaine plastique (9) pénètre dans les gorges (7) en formant ainsi des nervures.

4. Câble sous-marin de télécommunications à fibres optiques selon la revendication 3, caractérisé en ce que lesdites nervures présentent un profil qui est complémentaire de celui d'un petit tube, inséré dans lesdites gorges en hélice (7), qui loge de façon lâche au moins une fibre optique (8), ledit petit tube étant rempli d'un liquide incompressible.

5. Câble sous-marin de télécommunications à fibres optiques selon la revendication 1, caractérisé en ce que, dans le noyau plastique cylindrique enfermant l'organe de résistance, les gorges hélicoïdales (7), remplis d'un liquide incompressible, sont d'une largeur ainsi que d'une profondeur qui ne dépasse pas 5 mm.

6. Câble sous-marin de télécommunications à fibres optiques selon la revendication 5, caractérisé en ce que les gorges en hélice (7) reçoivent au moins un petit tube, rempli d'un liquide incompressible, dans lesquelles au moins une fibre optique (8) est logée de façon lâche, l'espace compris entre le tube et la gorge (7) étant aussi rempli d'un liquide incompressible.

7. Câble sous-marin de télécommunications à fibres optiques selon la revendication 1, caractérisé en ce que ledit organe de résistance comprend un élément métallique longitudinal à conductivité électrique élevée.

8. Câble sous-marin de télécommunications à fibres optiques selon la revendication 7, caractérisé en ce que ledit élément métallique est constitué par au moins un fil de cuivre incorporé dans ladite corde ou enroulé autour d'elle.
